# EUROPÄISCHE PATENTSCHRIFT

(11) **EP 0 623 654 B1**
(45) Veröffentlichungstag und Bekanntmachung des Hinweises auf die Patenterteilung: **24.09.1997**
(21) Anmeldenummer: 94810237.1
(22) Anmeldetag: 27.04.1994
(51) Int. Cl.: C09B 29/08, C09B 29/01, C09B 29/033, D06P 3/54, C09B 67/22, B41M 5/38

(54) **Azofarbstoffe**
Azo dyes
Colorants azoiques

(30) Priorität: 06.05.1993 CH 1390/93; 04.06.1993 CH 1673/93
(43) Veröffentlichungstag der Anmeldung: 09.11.1994
(73) Patentinhaber: Ciba Specialty Chemicals Holding Inc., 4057 Basel (CH)
(72) Erfinder: Clément, Antoine, CH-4058 Basel (CH); Tzikas, Athanassios, Dr., CH-4133 Pratteln (CH)

(56) Entgegenhaltungen:
- EP-A- 0 391 121
- EP-A- 0 443 984
- DE-A- 2 308 044

## Beschreibung

Gegenstand der vorliegenden Erfindung sind Dispersionsfarbstoffe, Verfahren zu deren Herstellung sowie ihre Verwendung zum Färben von Textilmaterialien.

Aus der EP-A-0 391 121 sind disperse Monoazofarbstoffe bekannt, die sich von den erfindungsgemässen Farbstoffen durch die Substituenten an der Diazokomponente unterscheiden.

Das Verfahren zum Färben synthetischer Fasermaterialien aus organischen Lösungsmitteln mit Farbstoffen, welche sich von den erfindungsgemässen Farbstoffen durch die Substituenten am Aminostickstoff der Kupplungskomponente unterscheiden, ist aus der DE-A-2 308 044 bekannt.

Dispersionsfarbstoffe, d.h. Farbstoffe, welche keine wasserlöslichmachenden Gruppen enthalten, sind seit langem bekannt und werden zum Färben von hydrophobem Textilmaterial verwendet Vielfach sind die erhaltenen Färbungen jedoch nicht ausreichend thermomigrierecht. Dieses Problem tritt vor allem bei roten bis blauen Nuancen auf.

Zur Behebung dieses Mangels wurden schon spezielle Farbstoffe entwickelt, deren Diffusionsvermögen infolge ihrer molekularen Grösse und/oder Sperrigkeit möglichst niedrig ist Dies erschwert jedoch oft die Anwendbarkeit solcher Farbstoffe, da man mit ihnen nicht oder nur schlecht nach dem Ausziehverfahren färben kann und diese Farbstoffe sogar im Thermosol-Verfahren meistens unerwünscht hohe Fixiertemperaturen erfordern.

Gegenstand der vorliegenden Erfindung sind nun Dispersionsfarbstoffe, welche sehr thermomigrierechte Färbungen ergeben, aber trotzdem sowohl im Auszieh- und Thermosolverfahren als auch im Textildruck ein gutes Aufbauvermögen besitzen. Die Farbstoffe sind auch für den Aetzdruck geeignet.

Die erfindungsgemässen Farbstoffe entsprechen der Formel 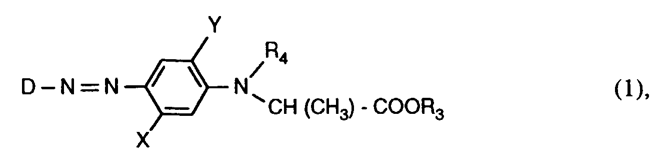 worin
D ein Rest der Formel 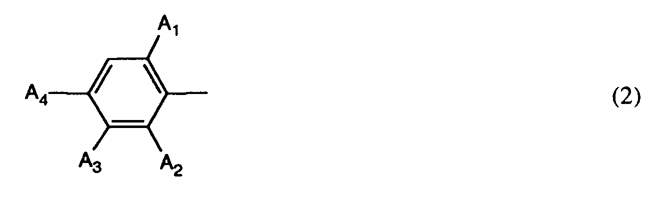 ist,
X Wasserstoff, Methyl, Halogen oder -NH-CO-R bedeutet, worin R Methyl, Ethyl, Ethoxy oder Amino ist,
Y Wasserstoff, Chlor oder Fluor,
R₃ Methyl oder Ethyl,
R₄ Wasserstoff, C₁-C₆-Alkyl oder Allyl,
A₁ Wasserstoff, Chlor, Nitro oder Cyan,
A₂ Wasserstoff, Halogen oder Cyan,
A₃ Wasserstoff, Chlor, COOCH₃ oder COOCH(CH₃)₂ und
A₄ Nitro oder SO₂CH₃ sind.

In besonders wertvollen Farbstoffen der Formel (1) bedeutet
X vorzugsweise - NH - CO - R oder Cl, worin R die oben definierte Bedeutung hat.
R₃ bedeutet vorzugsweise CH₃.
R₄ bedeutet vorzugsweise Wasserstoff oder Allyl; besonders bevorzugt wird Wasserstoff.
A₁ bedeutet vorzugsweise Chlor oder Cyan.
A₂ bedeutet vorzugsweise Wasserstoff oder Chlor.
A₃ bedeutet vorzugsweise Wasserstoff oder Chlor.

Die neuen Azofarbstoffe der Formel (1) können nach an sich bekannten Verfahren hergestellt werden. Man erhält sie beispielsweise, indem man eine Verbindung der Formel 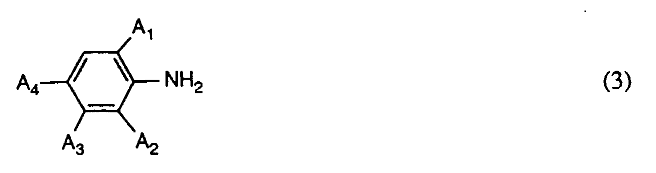 diazotiert und auf eine Kupplungskomponente der Formel 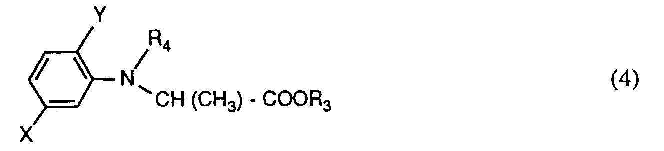 kuppelt, wobei A₁, A₂, A₃, A₄, X, Y, R₃ und R₄ die unter der Formeln (1) und (2) angegebenen Bedeutungen aufweisen.

Die Diazotierung der Verbindungen der Formel (3) erfolgt in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Phosphorsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (3) auf die Kupplungskomponente der Formel (4) erfolgt ebenfalls in bekannter Weise, beispielsweise in saurem, wässrigem oder wässrig-organischem Medium, vorteilhaft bei Temperaturen von -10 bis 30°C, insbesondere unter 10°C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium durchgeführt werden.

Die Diazokomponenten der Formel (3) sind bekannt oder können auf an sich bekannte Art und Weise hergestellt werden.

Die Kupplungskomponenten der Formel (4) können ebenfalls auf an sich bekannte Art und Weise hergestellt werden.

Die erfindungsgemässen Verbindungen der Formel (1) können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose 2¹/₂-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2¹/₂-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich zum Färben nach dem Thermosol-Verfahren, im Ausziehverfahren und für Druckverfahren.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale Farbtöne von sehr guten Gebrauchs-Echtheiten, wie vor allem guter Thermofixier-, Plissier-, Chlor- und Nassechtheit wie Wasser-, Schweiss- und Waschechtheit; die Ausfärbungen sind ferner gekennzeichnet durch sehr gute Reibechtheit. Besonders hervorzuheben ist die gute Thermomigrationsechtheit und die sehr gute Lichtechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Ausserdem eignen sich die erfindungsgemässen Farbstoffe auch gut zum Färben von hydrophobem Textilmaterial aus überkritischem CO₂.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können, sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die erfindungsgemässen Farbstoffe der Formel (1) eignen sich ausserdem für moderne Aufzeichnungsverfahren, wie z.B. Thermotransfer-Printing.

Die folgenden Beispiele veranschaulichen die Erfindung weiter, ohne sie darauf zu beschränken. Teile und Prozente beziehen sich, sofern nicht anders angegeben, auf das Gewicht.

Beispiel 1: 10,7 g m-Toluidin, 45 ml 2-Chlorpropionsäuremethylester, 10 g Natriumcarbonat und 0,5 g Natriumbromid werden während 18 Stunden bei 125-130° C gerührt. Danach wird die Reaktionsmischung auf Raumtemperatur abgekühlt und mit Essigester/Wasser-Mischung extrahiert. Die Essigesterphase wird dann am Rotationsverdampfer eingeengt. Man erhält 17 g eines gelbbraunen Oels der Formel 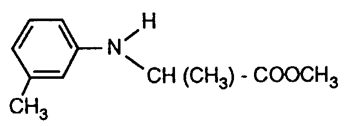 3,3 g 2-Cyan-4-nitroanilin werden auf übliche Art und Weise in konzentrierter Schwefelsäure diazotiert und bei einem pH-Wert zwischen 3 und 5 auf eine äquivalente Menge der vorstehend beschriebenen Kupplungskomponente gekuppelt. Das durch Filtration erhaltene Rohprodukt wird mit 100 ml Methanol versetzt, 2 Stunden bei Rückflusstemperatur gerührt und heiss abfiltriert. Nach dem Trocknen erhält man 6 g Kristalle vom Schmelzpunkt 175 - 177° C. Der Farbstoff hat die Formel

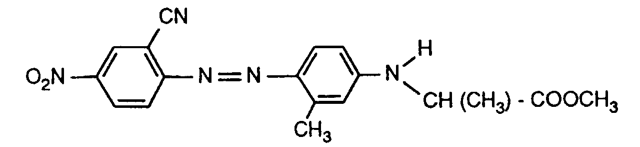

Er färbt Textilmaterial aus Polyester in roten Farbtönen. Die Färbungen weisen gute Echtheiten, insbesondere eine gute Thermomigrations- und Lichtechtheit auf.

Beispiel 2: 16,4 g 3-Propionamido-anilin, 11,7 g Staubsoda, 1,6 g Natriumbromid und 50 ml 2-Chlorpropionsäuremethylester werden während 5 Stunden bei 120 - 130° C gerührt.Danach wird das Reaktionsgemisch auf 120° C abgekühlt, heiss filtriert und das Nutschgut mit 20 ml 2-Chlorpropionsäuremethylester gewaschen. Das Filtrat wird am Rotationsverdämpfer eingeengt. Man erhält 25 g eines Pulvers der Formel 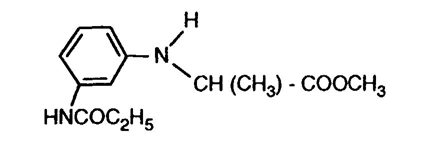 17,3 g 2-Chlor-4-Nitroanilin werden auf übliche Art und Weise in konzentrierter Schwefelsäure diazotiert und bei einem pH-Wert zwischen 3 und 5 auf eine äquivalente Menge der vorstehend beschriebenen Kupplungskomponente gekuppelt. Das durch Filtration erhaltene Rohprodukt wird mit 100 g Wasser versetzt und 1 Stunde bei 95 - 97° C gerührt, dann auf 70° C abgekühlt und filtriert. Nach der Trocknung erhält man ein rotes Pulver vom Schmelzpunkt 165 - 167° C. Der Farbstoff hat die Formel

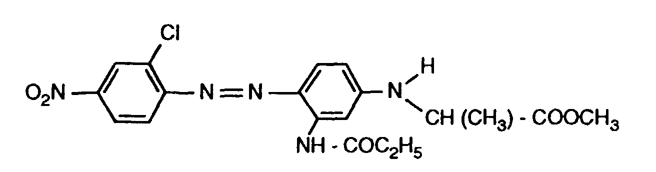

Er färbt Textilmaterial aus Polyester in brillanten roten Farbtönen.

### Beispiele 3 bis 47:

Nach der in den Beispielen 1 und 2 beschriebenen Arbeitsweise lassen sich auch die folgenden Farbstoffe herstellen. Sie färben Textilmaterial aus Polyester in den in der letzten Spalte der Tabellen 1 bis 8 verzeichneten Nuancen

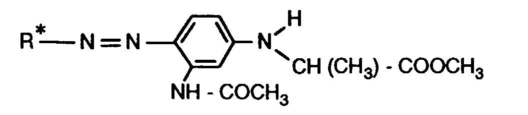

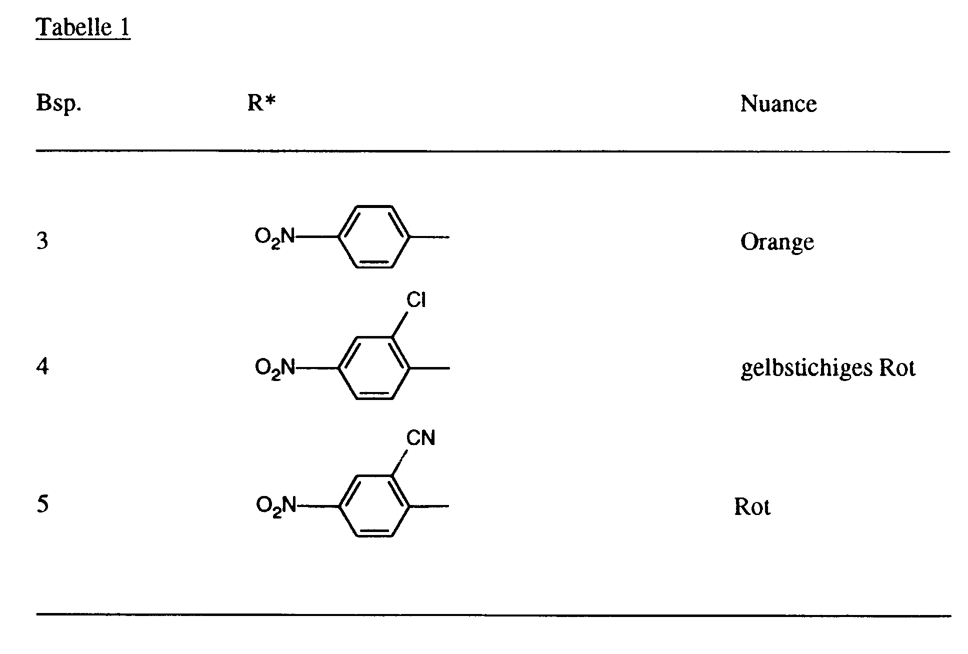

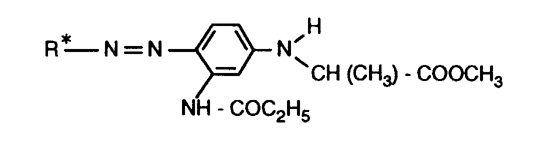

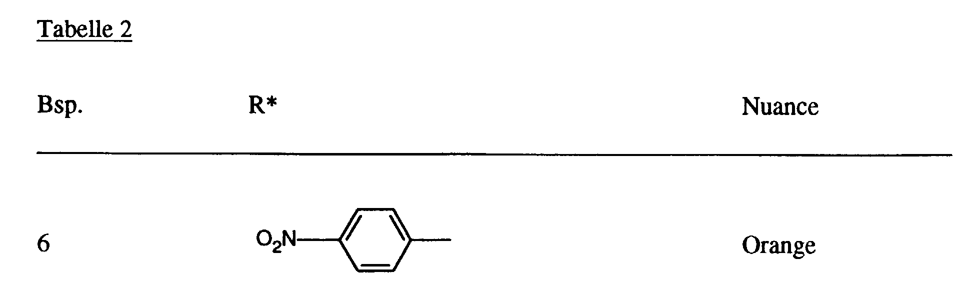

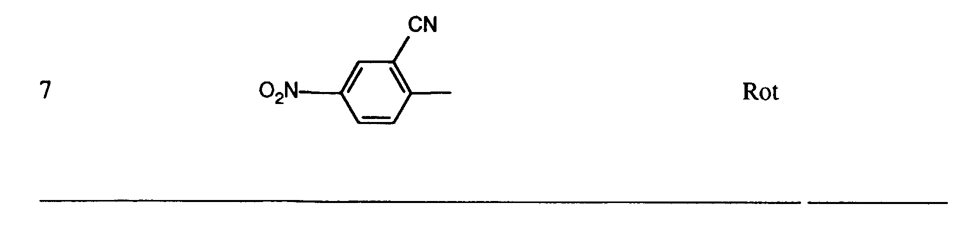

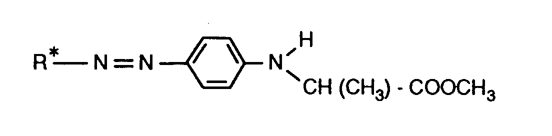

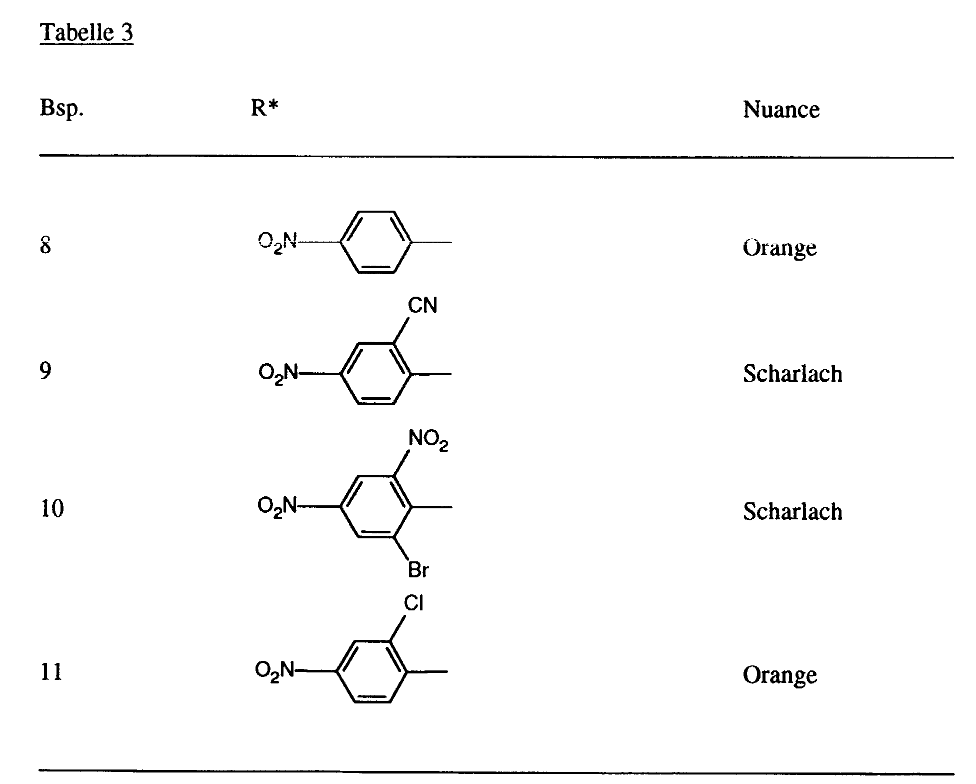

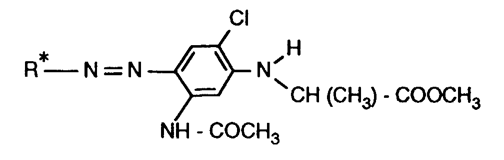

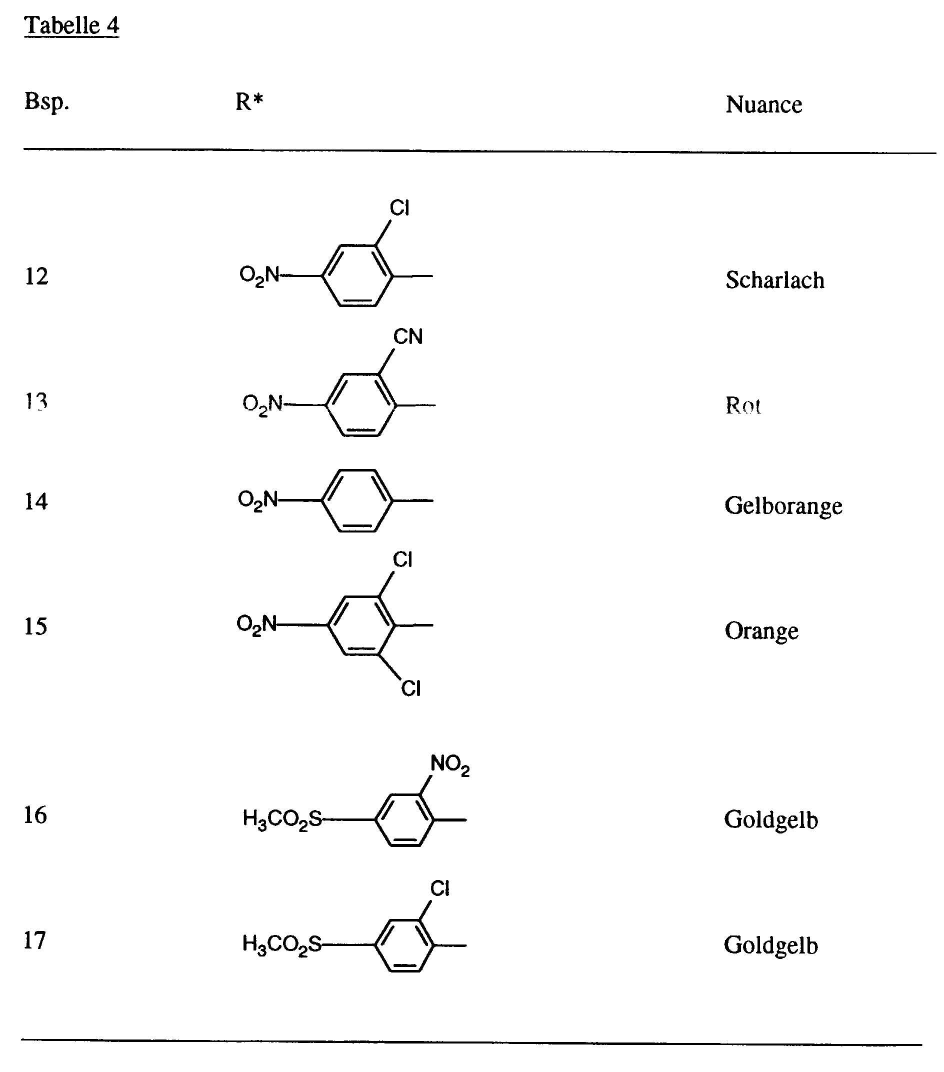

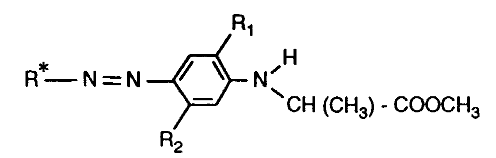

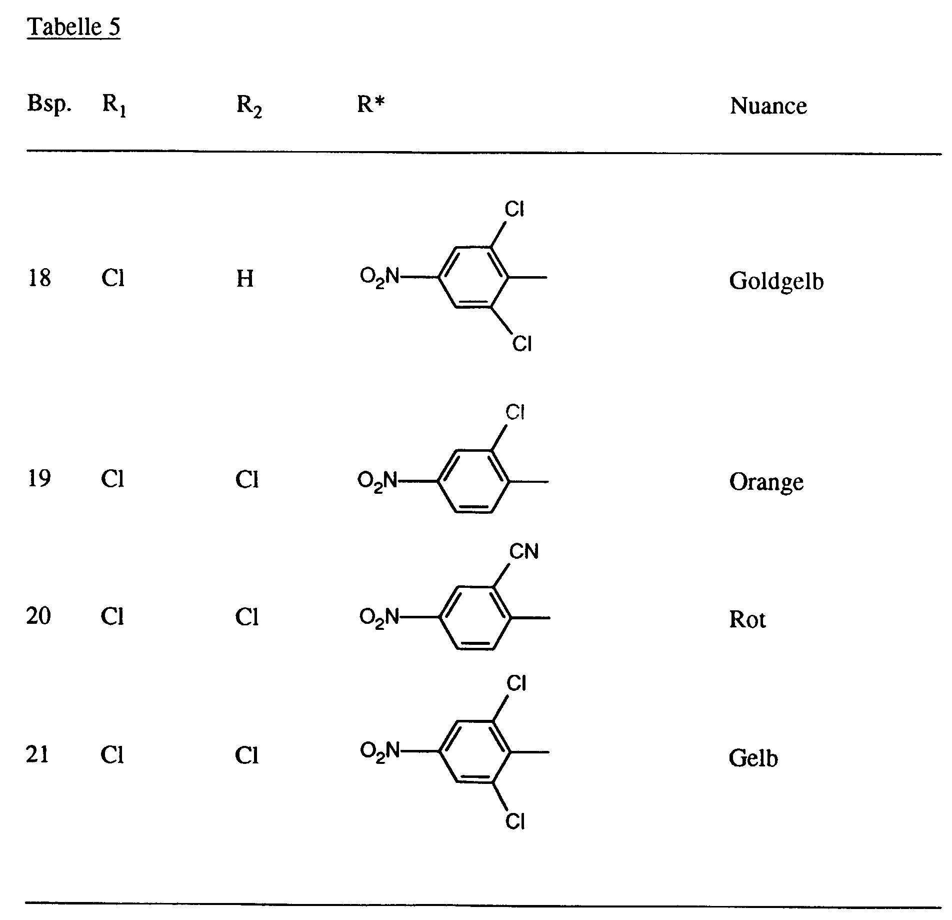

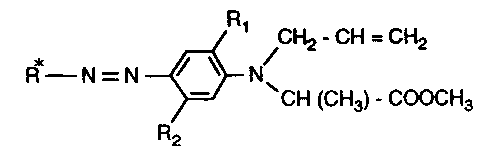

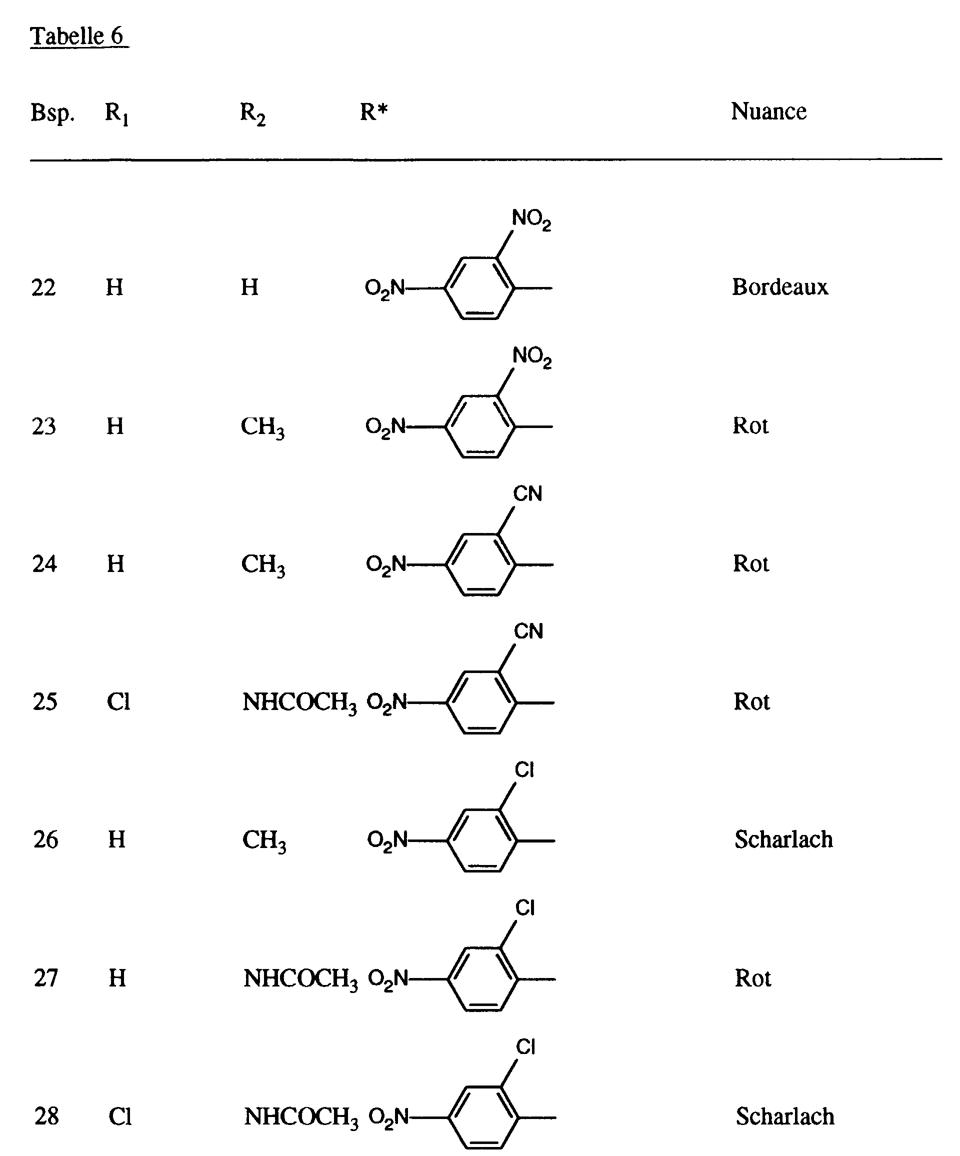

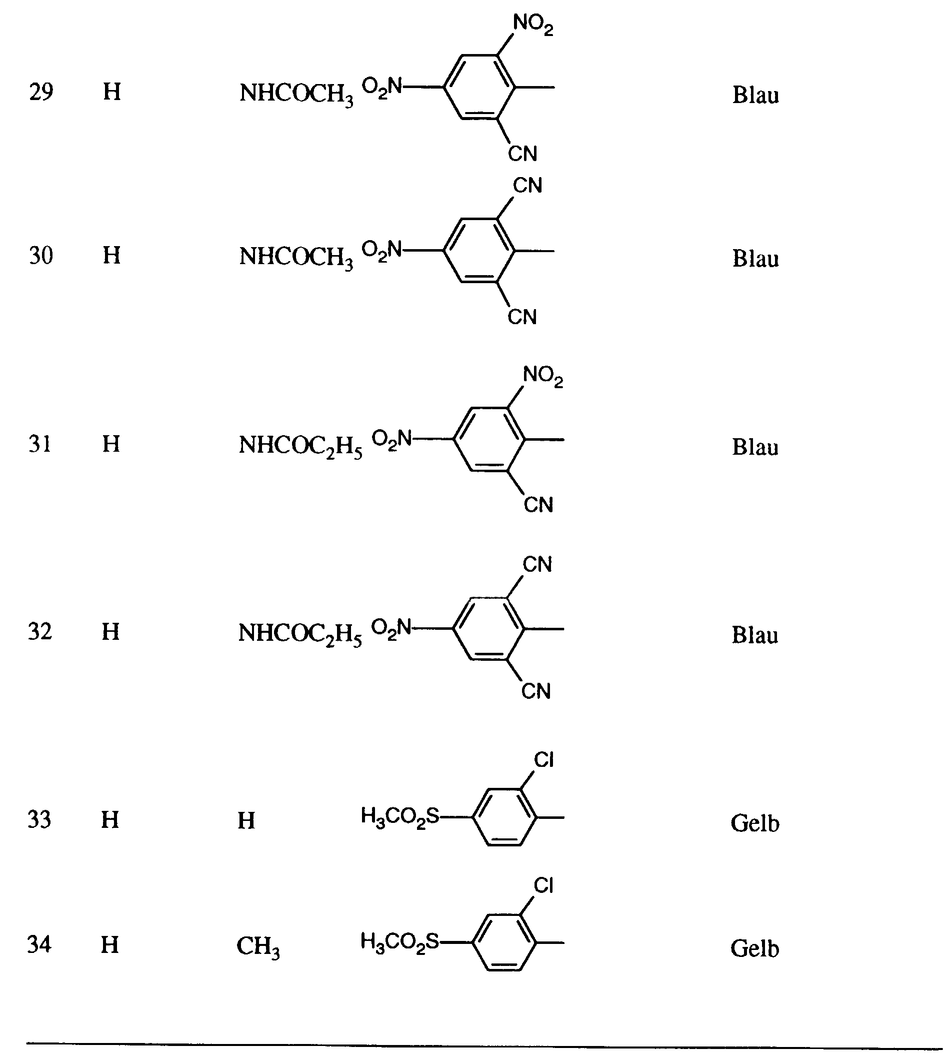

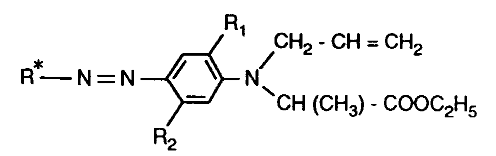

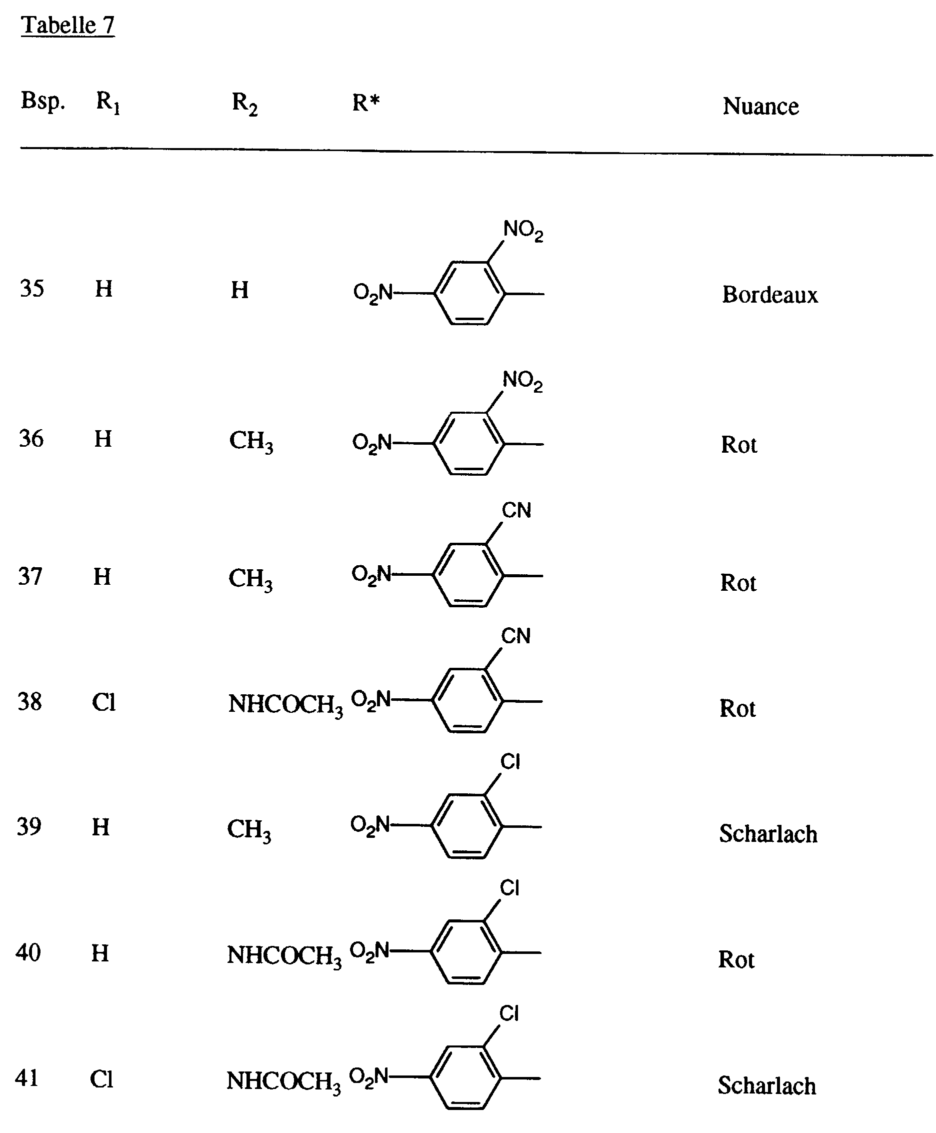

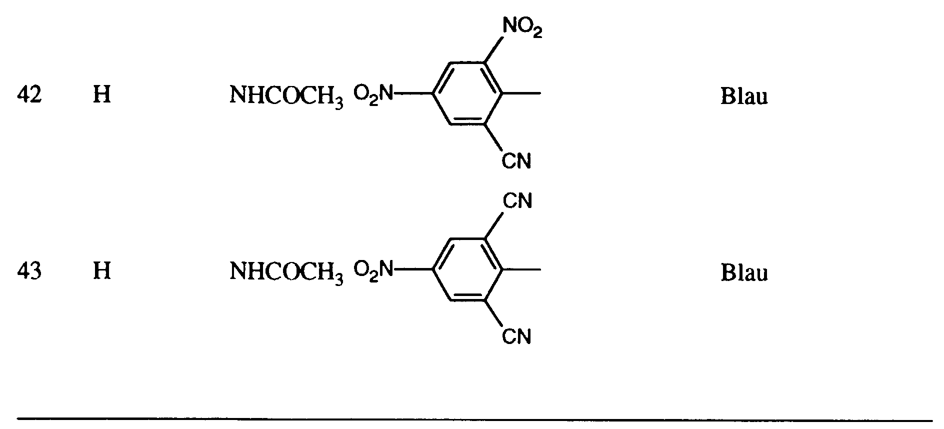

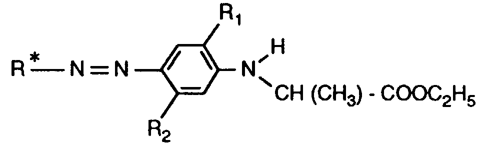

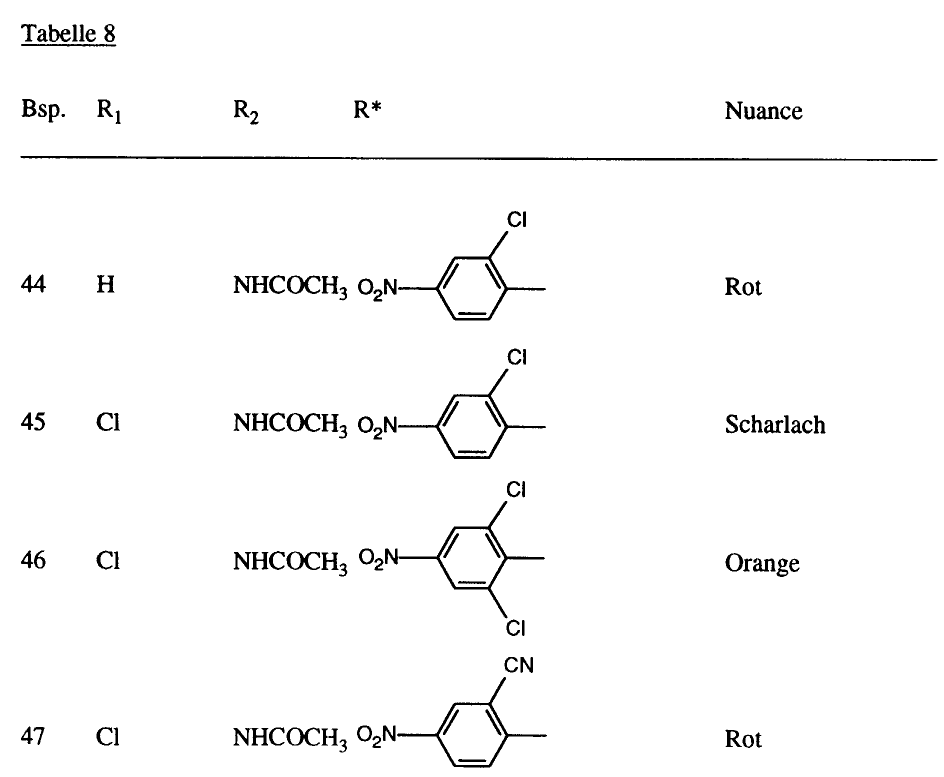

## Patentansprüche

1. Farbstoffe der Formel 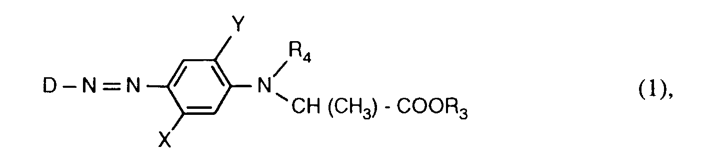 worin
D ein Rest der Formel 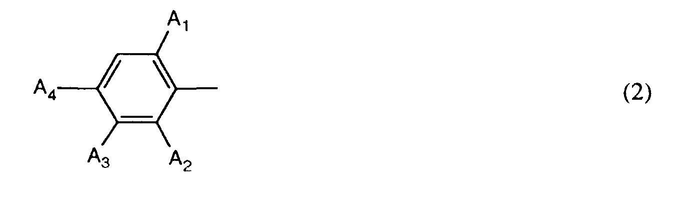 ist;
X Wasserstoff, Methyl, Halogen oder -NH-CO-R bedeutet, worin R Methyl, Ethyl, Ethoxy oder Amino ist;
Y Wasserstoff, Chlor oder Fluor;
R₃ Methyl oder Ethyl;
R₄ Wasserstoff, C₁-C₆-Alkyl oder Allyl;
A₁ Wasserstoff, Chlor, Nitro oder Cyan;
A₂ Wasserstoff, Halogen oder Cyan,
A₃ Wasserstoff, Chlor, COOCH₃ oder COOCH(CH₃)₂ und
A₄ Nitro oder SO₂CH₃ sind.

2. Farbstoffe gemäss Anspruch 1, worin R₄ Wasserstoff ist.

3. Farbstoffe gemäss einem der Ansprüche 1 oder 2, worin X -NH-CO-R oder Chlor bedeutet, wobei R die in Anspruch 1 definierte Bedeutung hat.

4. Farbstoffe gemäss einem der Ansprüche 1 bis 3, worin R₃ Methyl bedeutet.

5. Farbstoffe gemäss einem der Ansprüche 1 bis 4, worin Y Wasserstoff oder Chlor und R₃ Methyl bedeutet.

6. Farbstoffe gemäss Anspruch 1, worin A₁ Chlor oder Cyan bedeutet.

7. Farbstoffe gemäss Anspruch 1, worin A₃ Wasserstoff oder Chlor bedeutet.

8. Farbstoffe gemäss Anspruch 1, worin A₁ Chlor oder Cyan, A₂ Wasserstoff oder Chlor, A₃ Wasserstoff oder Chlor und A₄ Nitro oder SO₂CH₃ bedeutet.

9. Farbstoff gemäss Anspruch 1 der Formel

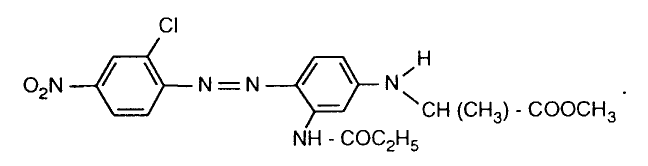

10. Verfahren zur Herstellung von Farbstoffen der Formel (1) gemäss Anspruch 1, dadurch gekennzeichnet, dass man eine Verbindung der Formel 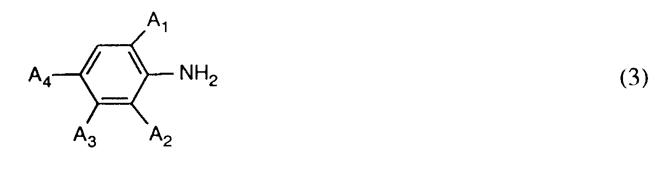 diazotiert und auf eine Kupplungskomponente der Formel 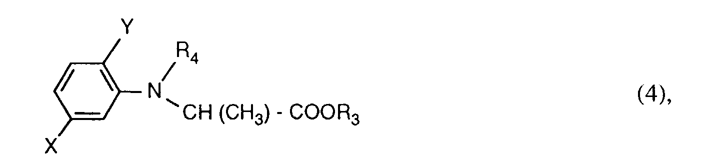 kuppelt, wobei
A₁ Wasserstoff, Chlor, Nitro oder Cyan,
A₂ Wasserstoff, Halogen oder Cyan,
A₃ Wasserstoff, Chlor, COOCH₃ oder COOCH(CH₃)₂,
A₄ Nitro oder SO₂CH₃,
X Wasserstoff, Methyl, Halogen oder -NH-CO-R bedeutet, worin R Methyl, Ethyl, Ethoxy oder Amino und
Y Wasserstoff, Chlor oder Fluor sind,
R₃ Methyl oder Ethyl ist und
R₄ Wasserstoff, C₁-C₆-Alkyl oder Allyl ist.

11. Verfahren gemäss Anspruch 10, worin R₄ Wasserstoff bedeutet.

12. Verwendung der Farbstoffe gemäss Anspruch 1 zum Färben oder Bedrucken von halbsynthetischem oder synthetischem hydrophobem Fasermaterial, inbesondere Textilmaterial.

13. Verwendung nach Anspruch 12 zum Färben oder Bedrucken von Textilmaterial aus Polyesterfasern.

14. Verfahren zum Färben oder Bedrucken von halbsynthetischem oder synthetischem hydrophobem Fasermaterial, insbesondere Textilmaterial dadurch gekennzeichnet, dass man eine oder mehrere der im Anspruch 1 definierten Verbindungen auf das genannte Material aufbringt oder diesem einverleibt.

15. Verfahren nach Anspruch 14, worin das hydrophobe Fasermaterial, vorzugsweise Textilmaterial, aus Polyesterfasern besteht.

16. Das gemäss Anspruch 14 oder 15 gefärbte oder bedruckte Material.

## Claims

1. A dye of the formula 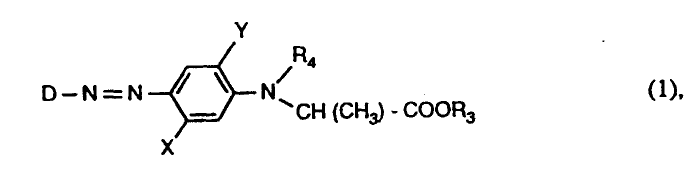 wherein
D is a radical of formula 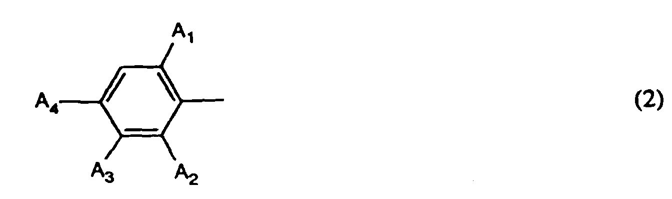
X is hydrogen, methyl, halogen or -NH-CO-R, wherein R is methyl, ethyl, ethoxy or amino;
Y is hydrogen, chloro or fluoro
R₃ is methyl or ethyl;
R₄ is hydrogen, C₁-C₆alkyl or allyl;
A₁ is hydrogen, chloro, nitro or cyano;
A₂ is hydrogen, halogen or cyano,
A₃ is hydrogen, chloro, COOCH₃ or COOCH(CH₃)₂ and
A₄ is nitro or SO₂CH₃.

2. A dye according to claim 1, wherein R₄ is hydrogen.

3. A dye according to either claim 1 or 2, wherein X is -NH-CO-R or chloro, where R is as defined in claim 1.

4. A dye according to any one of claims 1 to 3, wherein R₃ is methyl.

5. A dye according to any one of claims 1 to 4, wherein Y is hydrogen or chloro and R₃ is methyl.

6. A dye according to claim 1, wherein A₁ is chloro or cyano.

7. A dye according to claim 1, wherein A₃ is hydrogen or chloro.

8. A dye according to claim 1, wherein A₁ is chloro or cyano, A₂ is hydrogen or chloro, A₃ is hydrogen or chloro, and A₄ is nitro or SO₂CH₃.

9. A dye according to claim 1, of formula

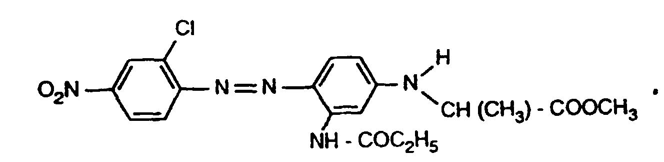

10. A process for the preparation of a dye of formula (1) according to claim 1, which comprises diazotising a compound of formula 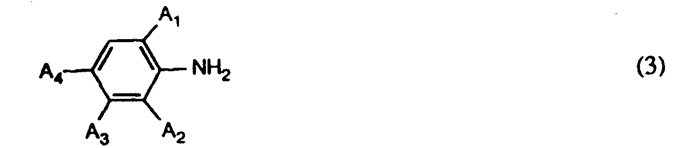 and coupling the diazonium salt to a coupling component of formula 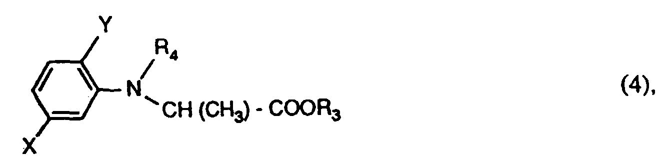 in which
A₁ is hydrogen, chloro, nitro or cyano;
A₂ is hydrogen, halogen or cyano,
A₃ is hydrogen, chloro, COOCH₃ or COOCH(CH₃)₂,
A₄ is nitro or SO₂CH₃,
X is hydrogen, methyl, halogen or -NH-CO-R, wherein R is methyl, ethyl, ethoxy or amino, and
Y is hydrogen, chloro or fluoro,
R₃ is methyl or ethyl, and
R₄ is hydrogen, C₁-C₆alkyl or allyl.

11. A process according to claim 10, wherein R₄ is hydrogen.

12. Use of a dye according to claim 1 for dyeing or printing semi-synthetic or synthetic hydrophobic fibre material, especially textile material.

13. Use according to claim 12 for dyeing or printing polyester fibre textile material.

14. A process for dyeing or printing semi-synthetic or synthetic hydrophobic fibre material, especially textile material, which comprises applying to, or incorporating in, said material one or more than one compound as defined in claim 1.

15. A process according to claim 14, wherein the hydrophobic fibre material, preferably textile material, consists of polyester fibres.

16. The material dyed or printed according to claim 14 or 15.

## Revendications

1. Colorants de formule 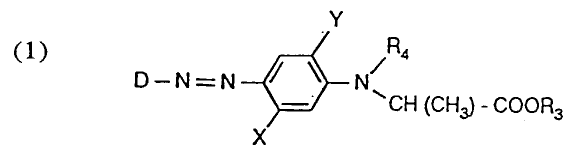 dans laquelle
D représente un résidu de formule 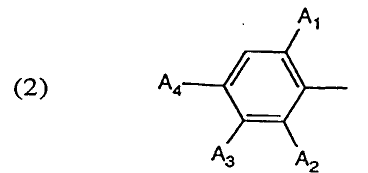
X représente un atome d'hydrogène, un groupe méthyle, un atome d'halogène ou un groupe -NH-CO-R, où R représente un groupe méthyle, éthyle, éthoxy ou amino,
Y représente un atome d'hydrogène, de chlore ou de fluor,
R₃ représente un résidu méthyle ou éthyle,
R₄ représente un atome d'hydrogène, un groupe alkyle en C₁₋₆ ou allyle,
A₁ représente un atome d'hydrogène ou de chlore, ou un groupe nitro ou cyano,
A₂ représente un atome d'hydrogène ou d'halogène, ou un groupe cyano,
A₃ représente un atome d'hydrogène ou de chlore, ou un groupe COOCH₃ ou COOCH(CH₃)₂ et
A₄ représente un groupe nitro ou SO₂CH₃.

2. Colorants conformes à la revendication 1 dans lesquels R₄ représente un atome d'hydrogène.

3. Colorants conformes à une des revendications 1 ou 2, dans lesquels X représente un groupe-NH-CO-R ou un atome de chlore, R ayant la signification indiquée dans la revendication 1.

4. Colorants conformes à une des revendications 1 à 3, dans lesquels R₃ représente un groupe méthyle.

5. Colorants conformes à une des revendications 1 à 4, dans lesquels Y représente un atome d'hydrogène ou un atome de chlore et R₃ représente un groupe méthyle.

6. Colorants conformes à la revendication 1 dans lesquels A₁ représente un atome de chlore ou un groupe cyano.

7. Colorants conformes à la revendication 1 dans lesquels A₃ représente un atome d'hydrogène ou de chlore.

8. Colorants conformes à la revendication 1 dans lesquels A₁ représente un atome de chlore ou un groupe cyano, A₂ représente un atome d'hydrogène ou de chlore, A₃ représente un atome d'hydrogène ou de chlore, et A₄ un groupe nitro ou SO₂CH₃.

9. Colorant conforme à la revendication 1 de formule

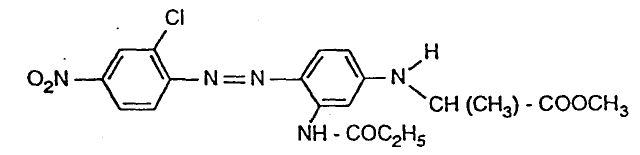

10. Procédé de préparation de colorants de formule (1) conforme à la revendication 1, caractérisé en ce que l'on procède à la diazotation d'un composé de formule 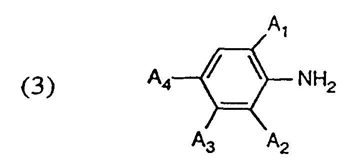 et en ce que l'on copule de produit obtenu avec un copulant de formule 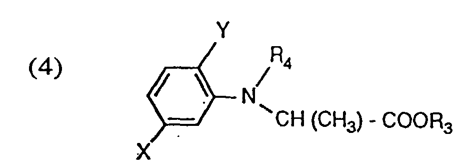 où
A₁ représente un atome d'hydrogène ou de chlore, ou un groupe nitro ou cyano,
A₂ représente un atome d'hydrogène ou d'halogène ou un groupe cyano,
A₃ représente un atome d'hydrogène ou de chlore, ou un groupe COOCH₃ ou COOCH(CH₃)₂,
A₄ représente un groupe nitro ou SO₂CH₃,
X représente un atome d'hydrogène, un groupe méthyle, un atome d'halogène ou un groupe -NH-CO-R, où R représente un groupe méthyle, éthyle, éthoxy ou amino, et
Y est un atome d'hydrogène, de chlore ou de fluor,
R₃ représente un résidu méthyle ou éthyle,
R₄ représente un atome d'hydrogène, un groupe alkyle en C₁₋₆ ou allyle.

11. Procédé conforme à la revendication 10, dans leque R₄ représente un atome d'hydrogène.

12. Utilisation des colorants conformes à la revendication 1 pour la teinture ou l'impression de matériaux fibreux hydrophobes serai-synthétiques ou synthétiques, en particulier de matériaux textiles.

13. Utilisation conforme à la revendication 12 pour la teinture ou l'impression de matériaux textiles en fibres de polyester.

14. Procédé de teinture ou d'impression de matériaux fibreux hydrophobes semi-synthétiques ou synthétiques, en particulier de matériaux textiles, caractérisé en ce que l'on applique ou incorpore un ou plusieurs des composés définis dans la revendication 1 sur/ dans le matériaux indiqué.

15. Procédé conforme à la revendication 14 dans lequel le matéiraux fibreux hydrophobe, de préférence un matériaux textile, est en fibres de polyester.

16. Matériau teint ou imprimé conformément à la revendication 14 ou 15.
